# EUROPÄISCHE PATENTSCHRIFT

(11) **EP 0 395 907 B1**
(45) Veröffentlichungstag und Bekanntmachung des Hinweises auf die Patenterteilung: **13.10.1993**
(21) Anmeldenummer: 90106609.2
(22) Anmeldetag: 06.04.1990
(51) Int. Cl.: A47J 31/057, A47J 31/10

(54) **Kaffeemaschine**
Coffee machine
Machine à café

(30) Priorität: 06.04.1989 DE 3911169
(43) Veröffentlichungstag der Anmeldung: 07.11.1990
(73) Patentinhaber: WMF WÜRTTEMBERGISCHE METALLWARENFABRIK AG, 73304 Geislingen (DE)
(72) Erfinder: Göckelmann, Karl, D-7921 Gerstetten (DE)
(74) Vertreter: Grünecker, Kinkeldey, Stockmair & Schwanhäusser Anwaltssozietät

(56) Entgegenhaltungen:
- AT-B- 188 457
- BE-A- 518 369
- DE-A- 1 429 799
- DE-A- 2 653 300
- DE-A- 2 707 245

## Beschreibung

Die Erfindung bezieht sich auf eine Kaffeemaschine der im Oberbegriff von Anspruch 1 erläuterten Art.

Eine derartige Kaffeemaschine ist aus der DE-A-2 702 245 bekannt. Diese Druckschrift beschreibt eine der üblichen Haushalts-Kaffeemaschinen, bei denen kaltes Wasser in abgemessener Menge in einen Vorratsbehälter und das Kaffeemehl in entsprechender Menge in ein Filtergefäß gefüllt wird. Der Wasserbehälter steht über eine Leitung mit einer Auslauföffnung oberhalb des Filtergefäßes bzw. der Brühkammer in Verbindung, wobei sich die Auslauföffnung auch oberhalb des höchsten Wasserspiegels im Vorratsgefäß für das kalte Wasser befindet, so daß unter Normalbedingungen kein Wasser aus dem Kaltwasservorrat in die Brühkammer gelangen kann. Die Verbindungsleitung zwischen dem Kaltwasservorrat und der Brühkammer wird über einen Durchlauferhitzer erhitzt, der zum Brühen von Kaffee angeschaltet wird. Der Durchlauferhitzer erhitzt das sich in der Verbindungsleitung befindende Wasser auf Brühtemperatur, wodurch dieses sich ausdehnt. Gleichzeitig bilden sich im Wasser lokal begrenzte Dampfinseln, die zusätzliche dafür sorgen, daß der Wasserspiegel in der Verbindungsleitung soweit ansteigt, daß heißes Wasser aus der Auslauföffnung in die Brühkammer übertreten kann. Der Brühvorgang dauert solange, bis der Kaltwasservorrat aus dem Vorratsbehälter aufgebraucht ist; es verbleibt somit nach Beendigung des Brühvorgangs kein Restwasser in der Leitung. Es ist weiterhin keine Einrichtung zum Trocknen des Kaffeemehls vorgesehen.

Aus der AT-PS 188 457 ist eine Kaffeemaschine zum Bereiten von Espresso bekannt, die zusätzlich zum Heißwasserbereiter für das Brühwasser einen Dampfkessel mit einer Auslaßdüse aufweist, durch den ein Dampfstoß zum Aufschäumen in die bereits gefüllte Tasse Kaffee bzw. in ein Gefäß mit Milch usw. abgegeben werden kann. Dieser zusätzliche Dampfkessel wird bei der bekannten Espressomaschine auch dazu verwendet, einen Dampfstoß zum Trocknen durch das Kaffeemehl zu leiten, nachdem die Tasse mit der vorbestimmten Kaffeemenge befüllt und ein Absperrventil für den Zufluß von Heißwasser geschlossen wurde. Bei der bekannten Kaffeemaschine steht somit der Dampf zum Trocknen des Kaffeemehls nur deshalb zur Verfügung, weil sowieso ein Dampfkessel für die Herstellung von Cappuccino vorgesehen ist. Dampfkessel arbeiten jedoch notwendigerweise bei einem erhöhten Druck, so daß eine Reihe zusätzlicher Sicherheitsvorkehrungen sowie eine besonders sorgfältige und druckdichte Ausgestaltung des Systems notwendig sind. Dies gilt auch dann, wenn im Störungsfall lediglich ein Kessel benutzt wird. Auch in diesem Falle kann lediglich der Druckkessel verwendet werden, wobei zusätzlich zum Dampfauslauf ein Wasserauslauf unter dem Wasserspiegel in diesem Dampfkessel vorgesehen werden muß. Durch die in diesem Dampfkessel notwendigerweise erhöhte Wassertemperatur
((Hier schließen sich die ursprünglich eingereichten Unterlagen, ab S. 2 der Beschreibung, mit den aus den beiliegenden Kopien der S. 4, 5 und 9 ersichtlichen Änderungen an)).
über 100 Grad Celcius kann jedoch kein geschmackvoller Filterkaffee gebrüht werden, bei dessen Brühung die Temperatur des Brühwassers 95 Grad Celcius nicht übersteigen sollte.

Das DE-GM 86 25 346 beschreibt eine Espressomaschine mit Cappuccinodüse, die einen Dampfkessel aufweist, der nicht direkt an eine Wasserversorgung angeschlossen werden kann, sondern bei Bedarf mit einer vorbestimmten Menge Wasser gefüllt wird. Das Fassungsvermögen des Dampfkessels ist in einem Ausführungsbeispiel auf 4 Tassen Kaffee zuzüglich derjenigen Wassermenge ausgelegt, die zur Bereitung einer ausreichenden Menge Dampf zum Aufschäumen und Erwärmen der Milch notwendig ist. Das heiße Brühwasser wird durch eine aus dem unteren Teil des Siedebehälters kommende Heißwasserleitung zum Brühgefäß geführt. Der Dampf tritt aus dem oberen Bereich des Siedebehälters aus und gelangt von dort durch eine gesonderte Dampfleitung zur Dampfdüse, wobei eine aus einer Vielzahl von mechanischen Steuerungsteilen bestehende Betätigungsvorrichtung zum Öffnen und Schließen der Verbindungen vorgesehen ist. Eine Verbindung zwischen dem Dampfbereich des Dampfkessels und der Brühkammer zum Trocknen des Kaffeemehls ist jedoch nicht vorgesehen.

Die im wesentlichen vollständige Entfernung des ausgelaugten Kaffeemehls aus der Brühkammer stellt ein generelles Problem bei Kaffeemaschinen dar. Sind fest installierte Kaffeemaschinen an das Kanalsystem anzuschließen, so kann das ausgelaugte Kaffeemehl durch einen zusätzlichen Schwall heißes bzw. kaltes Wasser ausgespült werden (Naßausspülung). Ist der Anschluß an das Kanalsystem nicht möglich oder nicht erwünscht, so muß das Kaffeemehl durch irgendwelche mechanischen Vorkehrungen entfernt werden. So kann beispielsweise die Brühkammer entnommen und das Kaffeemehl durch Umdrehen der Brühkammer ausgeschüttet werden. Auch das Abstreifen des Kaffeemehls durch automatisch oder manuell zu bedienende Abstreifer ist möglich. In allen diesen Fällen muß jedoch sichergestellt werden, daß so wenig wie möglich des ausgelaugten Kaffeemehls in der Brühkammer verbleibt. Dies gelingt umso besser, je trockener das Kaffeemehl ist. Es hat deshalb nicht an Versuchen gefehlt, das ausgelaugte Kaffeemehl soweit wie möglich zu trocknen.

Bei einer vorbenutzten Kaffemaschine wird durch konstruktive Gestaltung der Brühkammer durch die Erwärmung und somit Ausdehnung der in der Brühkammer befindlichen Luft während des Brühvorganges ein Überdruck erzeugt. Dieser Überdruck drückt dann, wenn der Heißwassserzulauf abgesperrt ist, die noch verbliebene Restmenge des Brühwassers durch das Kaffeemehl hindurch und trocknet somit das Kaffeemehl. Die Abstimmung der Größe des Luftpolsters in der Brühkammer ist jedoch sehr schwierig. Ist zuviel Luft in der Brühkammer vorhanden, so wird zwar ein guter Überdruck erzielt, der Druckausgleich dauert jedoch zu lange, so daß der zeitliche Abstand zwischen den Brühvorgängen zu groß wird. Ist das Luftpolster zu gering dimensioniert, erfolgt der Druckausgleich zu rasch und das Kaffeemehl wird nicht vollständig getrocknet.

Der Erfindung liegt somit die Aufgabe zugrunde, eine Kaffeemaschine zum Brühen von Heißgetränken aus einem Aromaträger derart auszugestalten, daß der ausgelaugte Aromaträger auf konstruktiv einfache Weise schnell und vollständig getrocknet werden kann.

Die Aufgabe wird durch die kennzeichnenden Merkmale des Anspruchs 1 gelöst.

Die erfindungsgemäße Ausgestaltung erfordert lediglich die Anordnung eines zusätzlichen, während des Brühvorgangs vom Brühwasser durchflossenen Durchlauferhitzers, der derart geschaltet ist, daß er eine restliche, nach Beendigung der Heißwasserzufuhr zur Brühkammer im Bereich des Durchlauferhitzers verbliebene Menge des zum Brühen verwendeten Heißwassers überhitzt bzw. verdampft und damit den ausgelaugten Aromaträger trocknet. Es ist weder ein zusätzlicher, druckdichter Dampfbehälter erforderlich, noch muß die Größe der Brühkammer exakt abgestimmt werden.

In der Heißwasserleitung gemäß Anspruch 2 ist der Durchlauferhitzer konstruktiv besonders einfach unterzubringen.

Die für den Durchlauferhitzer gemäß Anspruch 3 benötigte Heizschlange ist problemlos und kostengünstig überall am Markt erhältlich.

Durch die Anordnung des Durchlauferhitzers gemäß Anspruch 4 wird eine besonders effektive Trocknung erreicht.

Die Rückhalteeinrichtung im Durchlauferhitzer nach Anspruch 5 ist dort besonders zweckmäßig, wo die Gefahr besteht, daß das Heißwasser zu schnell abläuft.

Durch die Rückhalteeinrichtung wird auch in diesem Fall eine Restmenge Heißwasser bestimmt, die durch den Durchlauferhitzer zum Trocknen des Kaffeemehls erhitzt werden kann.

Ausführungsbeispiele der Erfindung werden nachfolgend anhand der Zeichnungen näher erläutert. Es zeigen:
Fig. 1 eine schematische Darstellung einer Brüheinrichtung einer Kaffeemaschine mit einem ersten Ausführungsbeispiel der Erfindung, und
Fig. 2 ein weiteres Ausführungsbeispiel der Erfindung.

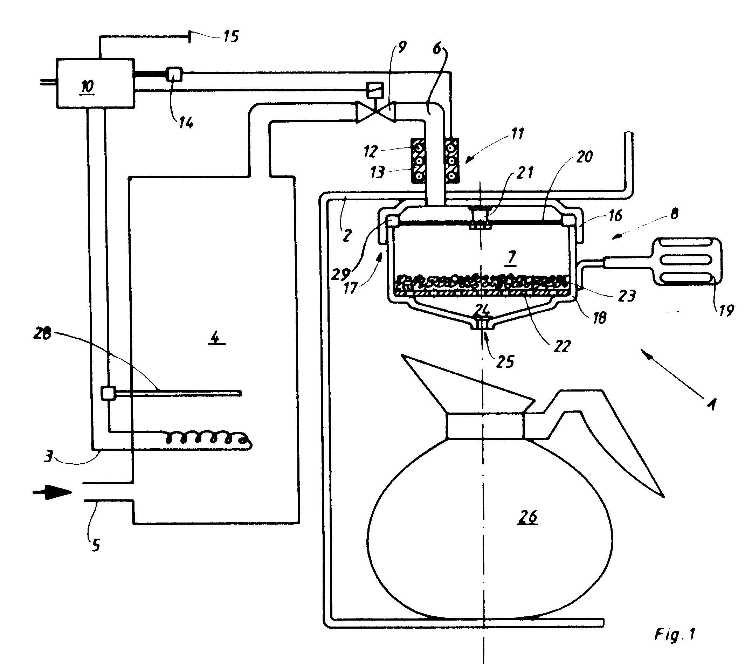

Aus Fig. 1 ist ein Teil einer Kaffeemaschine ersichtlich, von der nur die für die Erfindung wesentlichen Merkmale gezeichnet sind. Die Kaffeemaschine kann von jedem bekannten Typ sein.

Im dargestellten Ausführungsbeispiel weist die Kaffeemaschine 1 ein Gehäuse auf, von dem nur ein Teil einer Begrenzungswand 2 gezeichnet ist. Im Inneren des Gehäuses ist ein Heißwasserbereiter in Form eines mit einer Heizung 3 versehenen Heißwasserbehälters 4 angeordnet. Die Heizung 3 sowie ein ebenfalls im Heißwasserbehälter 4 angeordneter Thermostat 28 werden über eine Steuerung 10 in bekannter Weise gesteuert. In den Heißwasserbehälter 4 mündet ein Kaltwasser-Leitungsanschluß 5 zur Verbindung mit der Wasserleitung. Aus dem Heißwasserbehälter 4 mündet eine Heißwasserleitung 6 aus, die sich durch die Begrenzungswand 2 nach außen erstreckt und dort in eine Brühkammer 7 eines Brühers 8 mündet.

In der Heißwasserleitung 6 ist eine Absperrventil 9 vorgesehen, das mit der Steuerung 10 verbunden ist. In Durchflußrichtung des Heißwassers ist hinter dem Absperrventil 9, kurz vor der Einmündung der Heißwasserleitung 6 in die Brühkammer 7, ein Durchlauferhitzer 11 vorgesehen, der aus einer die Heißwasserleitung 6 umgebenden elektrischen Heizspirale 12 besteht, die in einem Gehäuse 13 untergebracht ist. Die Heizspirale 12 ist über einen Schalter 14 ebenfalls mit der Steuerung 10 verbunden. Die Steuerung 10 kann durch einen außen am Gehäuse der Kaffeemaschine 1 angeordneten Betätigungsknopf 15 zum Einleiten eines Brühvorganges aktiviert werden.

Der Brüher 8 ist als im wesentlichen druckdicht abgeschlossene Kapsel ausgebildet und enthält ein Halteteil 16, das an der Bodenwand 2 befestigt ist. Mit dem Halteteil 16 ist über einen Bajonettverschluß 17 ein Filterträger 18 lösbar verbunden. Beide Teile werden durch eine Dichtung 29 gegeneinander abgedichtet. Zum Lösen und Befestigen des Filterträgers 18 am Halteteil 16 ist ein Handgriff 19 vorgesehen.

Im Halteteil 16 ist ein Verteilsieb 20 für Brühwasser vorgesehen, das durch einen Abstandshalter 21 in vorbestimmtem senkrechten Abstand unter der senkrecht von oben einmündenden Heißwasserleitung 6 gehalten wird. Der Filterträger 18 enthält ein Filtersieb 22, auf dem, wie angedeutet, Kaffeemehl 23 in einer im wesentlichen gleichmäßigen Schicht abgelagert wird. Unter dem Filtersieb 22 erstreckt sich ein Auffangraum 24 mit in Richtung auf eine mittig angeordnete Auslauföffnung 25 abfallenden Wänden. Unter die Auslauföffnung 25 wird eines der üblichen Gefäße, dargestellt ist eine Karaffe 26, zur Aufnahme des fertig gebrühten Kaffees gestellt.

Die in Fig. 1 dargestellte Kaffeemaschine arbeitet wie folgt: Vor Beginn eines Brühvorganges wird das Kaffeemehl 23 von Hand oder über geeignete Dosiergeräte in den Filterträger 18 eingebracht und in einer möglichst gleichmäßigen Schicht auf dem Filtersieb 22 verteilt. Der Filterträger 18 wird von unten in das Halteteil 16 eingesetzt und der Bajonettverschluß 17 durch waagerechtes Drehen des Handgriffes 19 geschlossen. Die Karaffe 26 wird unter die Auslauföffnung 25 gestellt und ein Brühvorgang durch Betätigen des Betätigungsknopfes 15 eingeleitet. Durch den Betätigungsknopf 15 wird die Steuerung 10 aktiviert und öffnet das Absperrventil 9. In der Heißwasserleitung 6 kann ein nicht gezeichneter Durchflußmengenmesser vorgesehen sein. Ist die vorbestimmte Brühwassermenge abgemessen oder ist eine der Durchflußzeit der vorbestimmten Brühwassermenge entsprechende Zeitspanne verstrichen, wird das Absperrventil 9 geschlossen. Beim Schließen des Absperrventiles 9 befindet sich eine Restmenge Heißwasser zwischen dem Absperrventil 9 und der Brühkammer 7, die nur zögernd abfließen kann, da der Druck des nachfließenden Heißwassers fehlt, der das vorangegangene Brühwasser durch das Kaffeemehl 23 gedrückt hat. Gleichzeitig mit dem Schließen des Absperrventils 9 wird die Heizspirale 12 des Durchlauferhitzers 11 angeschaltet. Durch die Heizspirale 12 wird die Restmenge Heißwasser in der Heißwasserleitung 6 über die optimale Brühtemperatur erhitzt, bis sie verdampft, wobei sich in der Heißwasserleitung 6 vom Absperrventil 9 bis zur Brühkammer 7 ein Überdruck aufbaut, der das restliche Brühwasser vollständig durch das Kaffeemehl 23 drückt und das Kaffeemehl dabei trocknet. Die Steuerung 10 ist so programmiert, daß sie nach einer optimalen, empirisch festzulegenden Trocknungszeit die Heizschlange 12 des Durchlauferhitzers 11 abstellt. Der Filterträger 18 kann durch Drehen des Handgriffes 19 vom Halteteil 16 gelöst und über einem Kaffeesatz-Aufnahmebehälter ausgeklopft werden. Der Dampf hat alle Feuchtigkeit aus dem Kaffeesatz herausgedrückt, so daß beim Ausklopfen der trockene Kaffeesatz im wesentlich vollständig aus dem Filterträger fällt und kein verbleibender Kaffeesatz die Qualität des im nachfolgenden Brühvorgang hergestellten Kaffees mindert.

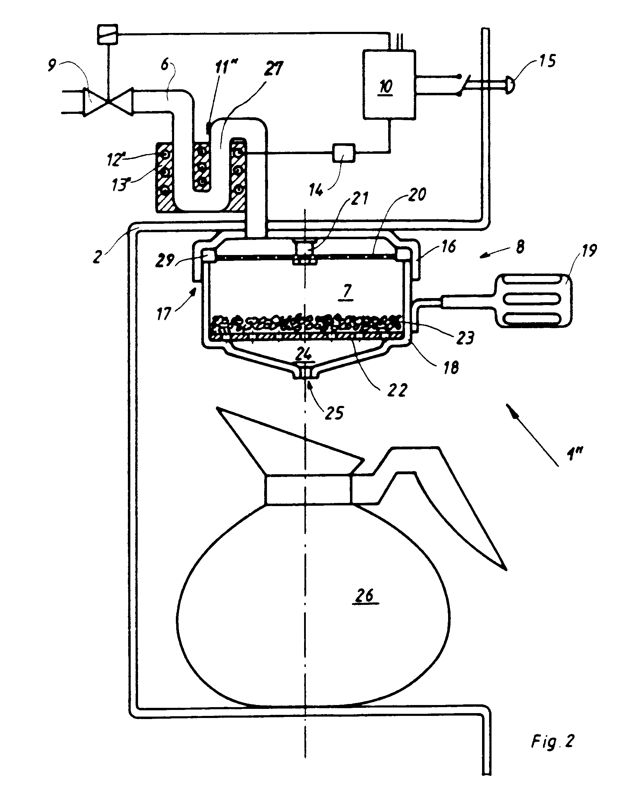

Ein abgewandeltes Ausführungsbeispiel einer Kaffeemaschine 1˝ ist aus Fig. 2 ersichtlich, wobei mit dem Ausführungsbeispiel nach Fig. 1 gleiche oder vergleichbare Bauteile mit den gleichen Bezugszeichen versehen und nicht nochmals erläutert sind. Die Kaffeemaschine 1˝ ist mit einem modifizierten Durchlauferhitzer 11˝ versehen. Der Durchlauferhitzer 11˝ enthält eine Rückhalteeinrichtung für eine zum Trocknen des Kaffeemehls ausreichende Restmenge Heißwasser in Form eines aufrechten, U-förmigen Krümmers 27 in der Heißwasserleitung 6. Der Krümmer 27 ist wiederum von einer in einem Gehäuse 13˝ untergebrachten elektrischen Heizschlange 12˝ umgeben. Der Durchlauferhitzer 11˝ mit dem Rückhaltekrümmer 27 kann überall dort verwendet werden, wo das Heißwasser auch nach dem Stoppen des Heißwasserzuflusses noch relativ schnell abläuft, so daß unter Umständen die Zeit nicht ausreicht, die Restmenge auf Trocknungstemperatur zu erhitzen. Dies kann beispielsweise der Fall sein, wenn die Kaffeemehlschicht auf dem Filtersieb 22 relativ dünn ist. Dies kann auch der Fall sein, wenn sich beispielsweise in der Brühkammer 7 nur schwer ein Überdruck aufbauen läßt oder wenn durch bauliche Besonderheiten (z.B. bei erhöhtem Druck des Heißwassers bei Espressomaschinen) das Heißwasser zu schnell in die Brühkammer gelangen würde. Die Arbeitsweise der Kaffeemaschine 1˝ entspricht der Kaffeemaschine 1 nach Fig. 1, lediglich mit dem Unterschied, daß die Restmenge Heißwasser in dem Krümmer 27 rückgehalten und weiter erhitzt wird.

In Abwandlung der beschriebenen und gezeichneten Ausführungsbeispiele können statt des Heißwasserbehälters auch andere Heißwasserbereiter, beispielsweise die üblichen Durchlauferhitzer oder Dampferzeuger, z.B. bei Espressomaschinen, vorgesehen sein. Die erfindungsgemäße Ausgestaltung ist auch dann einsetzbar, wenn das Brühwasser nicht in der Maschine selbst erhitzt sondern in bereits erhitztem Zustand von außen herangeführt wird, z.B. von einem externen Heißwasserbereiter. Die Heißwasserleitung liefert Heißwasser mit ca. 90°C. Mit dem zusätzlichen Durchlauferhitzer wird das Brühwasser auf die Brühtemperatur von z.B. 95°C weiter erwärmt. Registriert ein Durchflußmengenmesser, daß die Sollwassermenge durchgeflossen ist, schaltet das Einlaßventil ab. Die Restwassermenge, die im Rohr in der Heißwasserleitung steht, wird durch den weiterbeheizten Durchlauferhitzer in Dampf umgewandelt und drückt das Wasser durch den Brüher. Der Durchflußmengenmesser kann sowohl direkt vor dem Absperrentil angeordnet sein als auch auf der Kaltwasserseite am Leitungsanschluß. Es können andere Typen an- und abschaltbarer Durchlauferhitzer vorgesehen werden. Auch eine Anordnung eines Durchlauferhitzers an der Brühkammer ist möglich. Schließlich kann die Steuerung auch komplett per Hand oder vollautomatisch erfolgen.

## Patentansprüche

1. Kaffeemaschine (1) zum Brühen von Heißgetränken aus einem Aromaträger, mit einer Heißwasserleitung (6), die aus einem Wasservorrat (4) in eine Brühkammer (7) mündet, und mit einem Durchlauferhitzer (11, 11''), **dadurch gekennzeichnet,** daß bei einer Kaffeemaschine (1) mit einem im wesentlichen auf Brühtemperatur befindlichen Heißwasservorrat (4) und einem in der Heißwasserleitung (6) vorgesehenen Absperrventil (9), der Durchlauferhitzer (11, 11'') zwischen dem Absperrventil (9) und der Brühkammer (7) angeordnet ist, um eine nach dem Schließen des Absperrventils (9) zur Beendigung des Brühvorganges in der Heißwasserleitung (6) verbliebene Restmenge Heißwasser zum Trocknen des ausgelaugten Aromaträgers zusätzlich weiter zu erhitzen.

2. Kaffeemaschine nach Anspruch 1, **dadurch** **gekennzeichnet,** daß der Durchlauferhitzer (11, 11') in der Heißwasserleitung (6) angeordnet ist.

3. Kaffeemaschine nach Anspruch 1 oder 2, **dadurch gekennzeichnet,** daß der Durchlauferhitzer (11, 11'') eine die Heißwasserleitung (6) umgebende, elektrische Heizschlange (12, 12'') aufweist.

4. Kaffeemaschine nach Anspruch 2 oder 3, **dadurch gekennzeichnet,** daß der Durchlauferhitzer (11, 11'') kurz vor Einmündung der Heißwasserleitung (6) in die Brühkammer (7) angeordnet ist.

5. Kaffeemaschine nach einem der Ansprüche 1 bis 4, **dadurch gekennzeichnet,** daß der Durchlauferhitzer (11'') eine Rückhalteeinrichtung (27) für die Restmenge Heißwasser enthält.

6. Kaffeemaschine nach Anspruch 5, **dadurch gekennzeichnet,** daß die Rückhalteeinrichtung (27) einen in der Heißwasserleitung (6) angeordneten, U-förmigen Krümmer aufweist.

## Claims

1. Coffee percolator (1) for brewing hot beverages from an aroma medium, with a hot water pipe (6) which leads from a water supply (4) into a brewing chamber (7), and with an instantaneous heater (11, 11''), characterised in that in a coffee percolator (1) with a hot water supply (4) which is essentially at brewing temperature and with a shut-off valve (9) provided in the hot water pipe (6), the instantaneous heater (11, 11'') is arranged between the shut-off valve (9) and the brewing chamber (7) in order further to heat additionally a residual quantity of hot water remaining in the hot water pipe (6) after closure of the shut-off valve (9) to end the brewing process, for drying the leached aroma medium.

2. Coffee percolator according to claim 1, characterised in that the instantaneous heater (11, 11') is arranged in the hot water pipe (6).

3. Coffee percolator according to claim 1 or 2, characterised in that the instantaneous heater (11, 11'') comprises an electric heating coil (12, 12'') surrounding the hot water pipe (6).

4. Coffee percolator according to claim 2 or 3, characterised in that the instantaneous heater (11, 11'') is arranged shortly before the hot water pipe (6) leads into the brewing chamber (7).

5. Coffee percolator according to any of claims 1 to 4, characterised in that the instantaneous heater (11'') contains a retaining device (27) for the residual quantity of hot water.

6. Coffee percolator according to claim 5, characterised in that the retaining device (27) comprises a U-shaped bend arranged in the hot water pipe (6).

## Revendications

1. Machine à café (1) pour la préparation de boissons chaudes à partir d'une substance aromatique, comprenant une conduite d'eau chaude (6) qui part d'un réservoir d'eau (4) et débouche dans une chambre d'ébullition (7) et un chauffe-eau rapide (11, 11''), **caractérisée** par le fait que dans une machine à café comportant un réservoir d'eau chaude (4) qui se trouve sensiblement à la température d'ébullition et une soupape d'arrêt (9) prévue dans la conduite d'eau chaude (6), le chauffe-eau rapide (11, 11'') est disposé entre la soupape d'arrêt (9) et la chambre d'ébullition (7) afin de continuer à chauffer une quantité résiduelle d'eau chaude restée dans la conduite d'eau chaude (6) après la fermeture de la soupape d'arrêt (9) pour mettre fin à l'opération d'ébullition, afin de sécher la substance aromatique sur laquelle est passée l'eau.

2. Machine à café selon la revendication 1, **caractérisée** par le fait que le chauffe-eau rapide (11, 11'') est disposé dans la conduite d'eau chaude (6).

3. Machine à café selon la revendication 1 ou 2, **caractérisée** par le fait que le chauffe-eau rapide (11, 11'') présente un serpentin de chauffage (12, 12'') électrique qui entoure la conduite d'eau chaude (6).

4. Machine à café selon la revendication 2 ou 3, **caractérisée** par le fait que le chauffe-eau rapide (11, 11'') est disposé juste avant l'endroit où la conduite d'eau chaude (6) débouche dans la conduite d'ébullition (7).

5. Machine à café selon l'une des revendications 1 à 4, **caractérisée** par le fait que le chauffe-eau rapide (11'') comprend un dispositif de retenue (27) pour la quantité résiduelle d'eau chaude.

6. Machine à café selon la revendication 5, **caractérisée** par le fait que le dispositif de retenue (27) présente un coude en forme de U disposé dans la conduite d'eau chaude (6).
